# FASCICULE DE BREVET EUROPEEN

(11) **EP 0 754 623 B1**
(45) Date de publication et mention de la délivrance du brevet: **31.10.2001**
(21) Numéro de dépôt: 96401588.7
(22) Date de dépôt: 17.07.1996
(51) Int. Cl.: B64D 15/12

(54) **Installation de connexion de dégivrage pour rotor de giravion**
Anschlussvorrichtung für einen Enteiser eines Hubschrauberrotors
Connection device for the deicer of a helicopter rotor

(30) Priorité: 20.07.1995 FR 9508805
(43) Date de publication de la demande: 22.01.1997
(73) Titulaire: EUROCOPTER, 13725 Marignane Cédex (FR)
(72) Inventeur: Mondet, Jean Joseph Henri, 13330 Pelissanne (FR); Roux, Serge Louis, 13700 Marignane (FR)
(74) Mandataire: Bérogin, Francis

(56) Documents cités:
- FR-A- 2 103 391
- US-A- 3 455 396
- US-A- 5 174 717

## Description

L'invention concerne un rotor de giravion avec une installation de connexion électrique entre au moins un conducteur d'alimentation électrique et un dispositif électrique de dégivrage d'une pale du rotor, lequel est du type comprenant :
- un moyeu, solidaire en rotation d'un mât rotor autour d'un axe de rotation du rotor, et
- au moins deux pales, dont chacune est reliée au moyeu par l'intermédiaire d'un organe de liaison sensiblement radial par rapport à l'axe de rotation et lui-même relié au moyeu par des moyens de retenue et d'articulation.

Par dispositif électrique de dégivrage, il faut comprendre, dans le présent mémoire descriptif, tout dispositif de dégivrage ou d'anti-givrage nécessitant, pour son fonctionnement, sa commande ou son contrôle, une alimentation électrique.

Il est connu d'équiper les pales de rotors de giravions, notamment d'hélicoptères, de dispositifs électriques de dégivrage, dont chacun comprend, en général, un faisceau de conducteurs électriques allongés incorporés dans la structure d'une pale à dégivrer, et alimentés depuis un circuit électrique de bord du giravion, par l'intermédiaire d'au moins un câble de connexion, comprenant au moins un élément conducteur électrique allongé, et raccordant au moins un conducteur électrique du dispositif de dégivrage porté par la pale à au moins un conducteur d'alimentation électrique porté par le moyeu, et en général monté fixe en repère tournant avec l'ensemble mât-moyeu, dans une partie tubulaire de cet ensemble dans laquelle est également logé un collecteur électrique de dégivrage, auquel ledit conducteur d'alimentation est raccordé.

L'installation de connexion du rotor de l'invention est du type comprenant au moins un tel câble de connexion, et le problème à la base de l'invention est d'améliorer la tenue mécanique et électrique d'une telle installation de connexion par rapport à celles connues, équipant actuellement les rotors d'hélicoptères à pales munies d'un dispositif électrique de dégivrage.

Plus précisément, le but de l'invention est de proposer un rotor de giravion avec une installation de connexion du type présenté ci-dessus, dont chaque câble de connexion présente une structure et suit un cheminement de façon à assurer une atténuation des sollicitations mécaniques dudit câble, ainsi qu'à assurer une meilleure reprise des efforts sollicitant ce câble de connexion lorsque le rotor tourne, et que chaque pale effectue ses débattements angulaires en pas, battement et traînée.

A cet effet, le rotor selon l'invention se caractérise en ce que le câble de connexion [raccordant au moins un conducteur d'alimentation électrique porté par le moyeu à au moins un conducteur électrique du dispositif de dégivrage porté par une pale], comprend un premier tronçon, dont une première extrémité, en position radiale interne, est reliée audit conducteur d'alimentation du moyeu par un premier connecteur monté sur le moyeu, et dont la seconde extrémité se raccorde à une première extrémité d'un second tronçon du câble de connexion, ledit second tronçon comprenant une première crosse aérienne, en forme de demi-boucle aplatie, et sa seconde extrémité étant reliée audit conducteur de dégivrage de ladite pale par un second connecteur, implanté sur la partie supérieure de la pale, au moins ladite première crosse ayant une structure non blindée et présentant une partie allongée de section transversale sensiblement rectangulaire aplatie, dont la plus grande dimension est sensiblement perpendiculaire à l'axe de rotation, ainsi qu'une concavité tournée sensiblement vers lesdits moyens de retenue et d'articulation, ladite première crosse étant déformable en flexion et torsion pour s'accommoder des débattements angulaires en pas, traînée et battement de la pale et de son organe de liaison par rapport au moyeu.

Compte tenu de l'implantation avantageuse du second connecteur sur la partie supérieure de la pale, sensiblement à l'extrémité radiale interne de la partie courante de cette pale, pour ne pas gêner son repliage éventuel, et compte tenu également de la dimension radiale de son organe de liaison, pouvant être aussi bien un pied de pale en fourche qu'un organe, distinct de la pale, communément appelé manchon et conformé en double chape pour sa liaison, d'une part, à la pale et, d'autre part, aux moyens de retenue et d'articulation sur le moyeu, l'installation est avantageusement telle que la seconde extrémité du second tronçon du câble de connexion est reliée au second connecteur en étant raccordée à une première extrémité d'un troisième tronçon de câble de connexion, s'étendant sensiblement radialement sur l'organe de liaison correspondant, auquel il est fixé par au moins une première et une seconde liaisons respectivement à proximité de ses première et seconde extrémités en position respectivement radiales interne et externe, le troisième tronçon étant relié par sa seconde extrémité audit second connecteur, et ayant également une structure non blindée, présentant une partie allongée de section transversale sensiblement rectangulaire aplatie, dont la plus grande dimension est sensiblement perpendiculaire à l'axe de rotation.

Cette partie allongée de la première crosse et/ou du troisième tronçon du câble de connexion comprend avantageusement plusieurs éléments conducteurs électriques allongés, sensiblement parallèles entre eux, espacés les uns des autres et noyés dans une matrice de gainage isolante et élastiquement déformable entre des bandes de toile sur les grands côtés de sa section transversale sensiblement rectangulaire, de sorte que la structure de cette partie allongée permette un déplacement des éléments conducteurs par rapport aux bandes de toile assurant la résistance mécanique, grâce à la matrice élastiquement déformable, ce qui permet d'atténuer les sollicitations mécaniques sur les éléments conducteurs et simultanément une meilleure reprise, au niveau des bandes de toile, des efforts sollicitant le câble de connexion, en particulier dans sa partie flexible et torsible que constitue sa première crosse aérienne.

Pour un rotor sur lequel chaque organe de liaison est distinct du pied de la pale correspondante, et comporte une partie radiale externe agencée en chape externe dans laquelle le pied de pale est retenu, le câble de connexion de l'invention est en outre avantageusement tel que la seconde extrémité du troisième tronçon de câble est reliée au second connecteur en étant raccordée à une première extrémité d'un quatrième tronçon de câble, comprenant une seconde crosse aérienne s'étendant dudit organe de liaison à la pale, et dont la seconde extrémité est raccordée audit second connecteur.

Dans ce cas, la seconde crosse du câble, qui relie la partie radiale externe de l'organe de liaison à la pale, peut présenter, dans une forme simple de réalisation, une section transversale arrondie, et le second connecteur peut comprendre, d'une part, une embase raccordée audit conducteur de dégivrage de la pale, et munie d'une collerette de fixation sur la pale, et, d'autre part, une fiche connectée sur l'embase et munie d'un raccord monté sur la seconde extrémité dudit quatrième tronçon de câble relié à la pale. Eventuellement, la structure de cette seconde crosse aérienne du câble de connexion peut être blindée, auquel cas l'embase, la fiche et le raccord du second connecteur sont également blindés.

Lorsque le pied de chaque pale est retenu dans la chape externe de l'organe de liaison correspondant par deux broches sensiblement parallèles entre elles, et dont l'une est amovible pour permettre le repliage manuel de la pale par rapport à l'organe de liaison par pivotement autour de l'autre broche, la fiche du second connecteur sur la seconde extrémité du quatrième tronçon de câble se connecte avantageusement de façon amovible à l'embase correspondante, fixée sur la pale, du second connecteur, de sorte à permettre une déconnexion et une connexion manuelles du second connecteur respectivement avant le repliage et après la remise en place de la pale en configuration de vol.

Par contre, si le rotor est tel que, pour chaque organe de liaison, la chape externe retenant le pied de la pale correspondante est agencée dans une ferrure de repliage, constituant la partie radiale externe de l'organe de liaison, et montée sur ce dernier par une liaison pivotante autour d'un axe de repliage de la pale avec la ferrure par rapport à l'organe de liaison, afin de permettre un repliage "automatique" de la pale, à l'aide d'au moins un actionneur monté sur l'organe de liaison et commandant les pivotements de la ferrure par rapport à cet organe de liaison, il est alors avantageux que la seconde crosse du câble de connexion s'étende du second connecteur, sur la pale, à une partie tournante d'un raccord tournant comprenant également une partie fixe sur l'organe de liaison, et sur laquelle la partie tournante est montée rotative coaxialement à la liaison pivotante de la ferrure de repliage sur l'organe de liaison, la partie fixe du raccord tournant étant reliée à la seconde extrémité, radiale externe, du troisième tronçon de câble par une partie du quatrième tronçon de câble qui, de préférence, s'étend sur l'organe de liaison. Ainsi, cette réalisation avec un raccord tournant permet de commander les repliages et dépliages automatiques de la pale sans avoir à effectuer de déconnexion ou connexion au niveau de l'un quelconque des deux connecteurs de l'installation.

Que la pale soit non repliable, ou repliable manuellement ou grâce à un actionneur, le premier tronçon de câble peut comprendre, dans une forme simple de réalisation, au moins une partie radiale de section transversale arrondie, dont l'extrémité radiale interne est montée dans un raccord d'une fiche du premier connecteur, ladite fiche étant complémentaire d'une embase du premier connecteur qui est raccordée au conducteur d'alimentation sur le moyeu et munie d'une collerette montée sur le moyeu. Eventuellement la structure de cette partie radiale peut être blindée, auquel cas le raccord, la fiche et l'embase du premier connecteur sont également blindés. Compte tenu des encombrements disponibles sur et autour du moyeu, des organes de liaison, des moyens de retenue et d'articulation, des systèmes de butées de battements hautes et basses dont le rotor est éventuellement équipé, ainsi que d'autres équipements pouvant être montés sur le moyeu, tels que cloche d'élinguage et coupole profilée, selon un premier mode avantageux de réalisation, la partie radiale du premier tronçon de câble s'étend sensiblement sur toute la longueur du premier tronçon, au-dessus de l'organe de liaison et sensiblement dans la même direction radiale que ce dernier, la première crosse du câble étant à concavité tournée sensiblement radialement vers l'axe de rotation, de sorte à présenter une configuration favorable à ses déformations en torsion et flexion pour s'adapter aux débattements, par rapport au moyeu, de la partie de l'organe de liaison à laquelle elle est reliée.

Toutefois, si la partie radiale du premier tronçon de câble ne peut s'étendre sensiblement au-dessus de l'organe de liaison et/ou sur toute la longueur de ce premier tronçon, pour des raisons de disponibilité d'encombrement, selon un second mode avantageux de réalisation, cette partie radiale du premier tronçon de câble s'étend entre deux organes de liaison voisins du rotor, et l'extrémité radiale externe de cette partie radiale est, d'une part, fixée au moyeu par une liaison et, d'autre part, prolongée vers la première crosse du câble par une partie de premier tronçon s'étendant en direction sensiblement circonférentielle sur le moyeu, et de section transversale sensiblement rectangulaire aplatie, dont la plus grande dimension est sensiblement perpendiculaire à l'axe de rotation, la première crosse étant alors à concavité tournée en direction sensiblement circonférentielle vers l'organe de liaison correspondant.

Dans ces différentes réalisations, au moins une partie de section arrondie du câble, mais de préférence chacune d'elles, se raccorde à au moins une partie de section sensiblement rectangulaire aplatie par un raccord de section évolutive, et/ou au moins une liaison du câble de connexion à l'organe de liaison peut comprendre une bride de liaison surmoulée sur le câble de connexion, pour faciliter son montage.

En particulier, pour éviter le fouettement du troisième tronçon de câble sur l'organe de liaison, et pour protéger tant ce tronçon du câble que l'organe de liaison, sur un rotor sur lequel la partie radiale interne de chaque organe de liaison est agencée en chape interne et les moyens de retenue et d'articulation correspondants comprennent une armature fixée entre les branches de la chape interne par des axes boulonnés à tête freinée par des freins de tête, il est avantageux que la première liaison du câble de connexion à l'organe de liaison soit assurée à l'aide d'au moins un support desdits freins de tête, le support étant lui-même retenu sur l'organe de liaison par l'un au moins des axes boulonnés.

De même, pour un rotor sur lequel chaque organe de liaison est relié au moyeu ou aux organes de liaison voisins par deux amortisseurs de traînée articulés chacun par une extrémité dans l'une respectivement de deux chapes en saillie latéralement sur les côtés opposés de l'organe de liaison, radialement à l'extérieur des moyens de retenue et d'articulation correspondants, il est avantageux que la seconde liaison du câble de connexion à l'organe de liaison soit assurée à l'aide d'une attelle disposée transversalement sur l'organe de liaison sur lequel elle est retenue par des axes de retenue des amortisseurs de traînée dans lesdites chapes latérales.

Selon la longueur radiale de l'organe de liaison, le câble de connexion peut être fixé à ce dernier par une liaison supplémentaire, intermédiaire entre les première et seconde liaisons, la liaison supplémentaire étant avantageusement assurée par un palier coulissant comprenant une partie en saillie sous le troisième tronçon de câble et en forme de queue d'aronde, et qui est montée coulissante dans la direction radiale de l'organe de liaison, dans un évidement en queue d'aronde complémentaire aménagé dans la partie supérieure de l'organe de liaison. Ce palier coulissant, qui permet avantageusement un déplacement relatif de ce tronçon de câble par rapport à l'organe de liaison, peut être tel que l'évidement en queue d'aronde est aménagé soit dans une plaque de palier coulissant, fixée sur le dessus de l'organe de liaison, soit directement dans la partie supérieure de cet organe de liaison, si sa structure le permet.

D'autres avantages et caractéristiques de l'invention ressortiront de la description d'exemples de réalisation décrits ci-dessous à titre non limitatif en référence aux dessins annexés sur lesquels :
- les figures 1a et 1b représentent partiellement un premier exemple d'installation de connexion de dégivrage sur un rotor principal quadripale d'hélicoptère à pales reliées au moyeu par des organes de liaison en manchons à double chape sur lesquels les pales sont repliables manuellement,
- la figure 2 est une vue partielle en perspective de l'installation et du rotor de la figure 1,
- la figure 2a est une coupe transversale schématique de tronçons du câble de connexion des figures 1 et 2,
- la figure 3 est une vue partielle en perspective du manchon de la figure 2 accouplé à un amortisseur de traînée,
- la figure 4 est une vue partielle, en partie en coupe et en partie en élévation latérale, d'une variante d'installation des figures 1 et 2 avec une fixation supplémentaire du câble de connexion sur le manchon,
- la figure 5 est une vue en coupe partielle selon V-V de la figure 4,
- la figure 6 est une vue schématique partielle en plan d'un second exemple d'installation de connexion sur un rotor quadripale dont chaque pale est reliée au moyeu par un organe de liaison en manchon à ferrure de repliage dans laquelle le pied de pale est retenu et avec laquelle la pale est repliée automatiquement,
- la figure 7 est une vue partielle et schématique, en partie en coupe et en partie en élévation latérale, de l'installation de la figure 6,
- la figure 8 est une vue en coupe selon VIII-VIII de la figure 6,
- les figures 9 à 12 représentent schématiquement des sections des tronçons du câble de connexion de l'installation des figures 6 et 7 , et
- la figure 13 est une vue analogue à la figure 1 pour une variante de réalisation, avec prise tournante, pour un rotor à pales à repliage automatique.

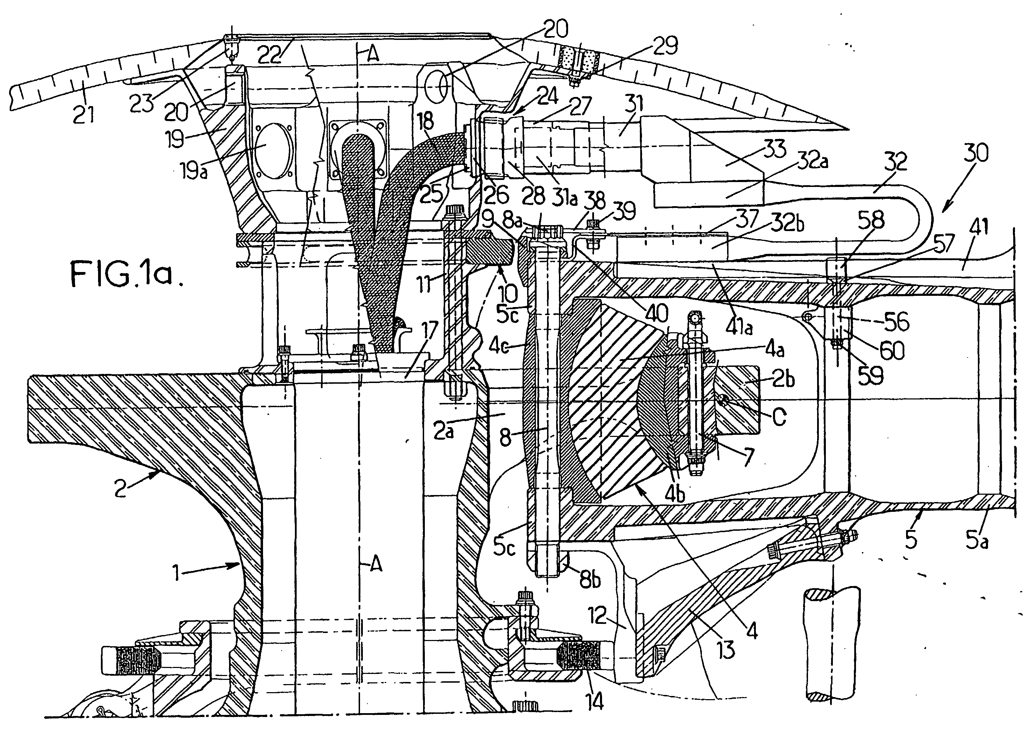

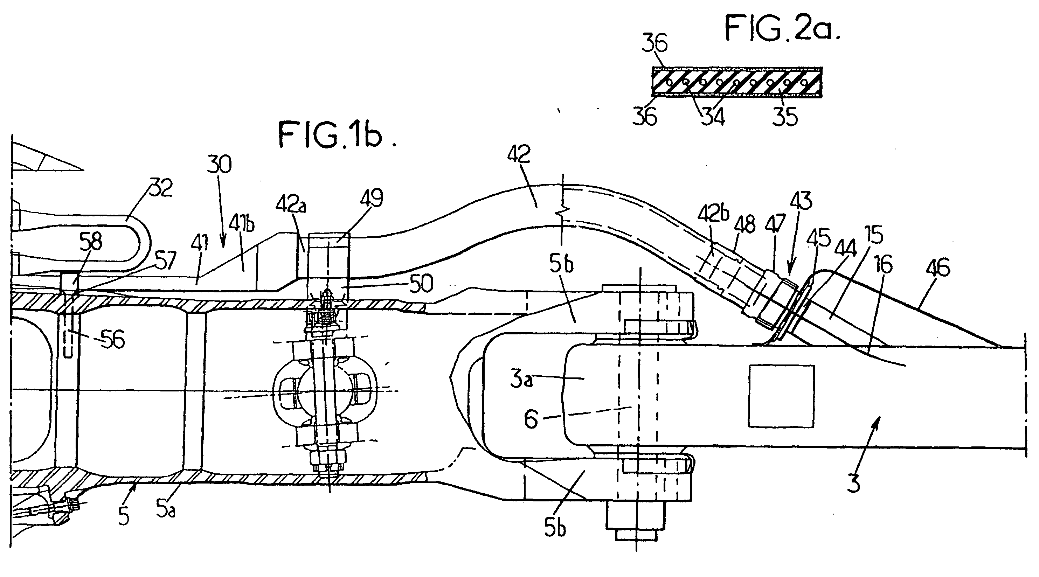

Les figures 1a et 1b représentent partiellement un rotor principal quadripale d'hélicoptère, dont le mât rotor 1 tubulaire a sa partie supérieure d'une seule pièce avec un moyeu 2, tournant avec lui autour de l'axe de rotation A-A du rotor. Le moyeu 2 est agencé en plateau radial (par rapport à l'axe A-A) alvéolé, présentant, pour chacune des quatre pales 3 du rotor, un alvéole 2a traversant axialement une partie radiale externe du plateau de moyeu 2, pour loger partiellement des moyens 4 de retenue et d'articulation sur le moyeu 2 d'un organe 5 de liaison de la pale correspondante 3 au moyeu 2.

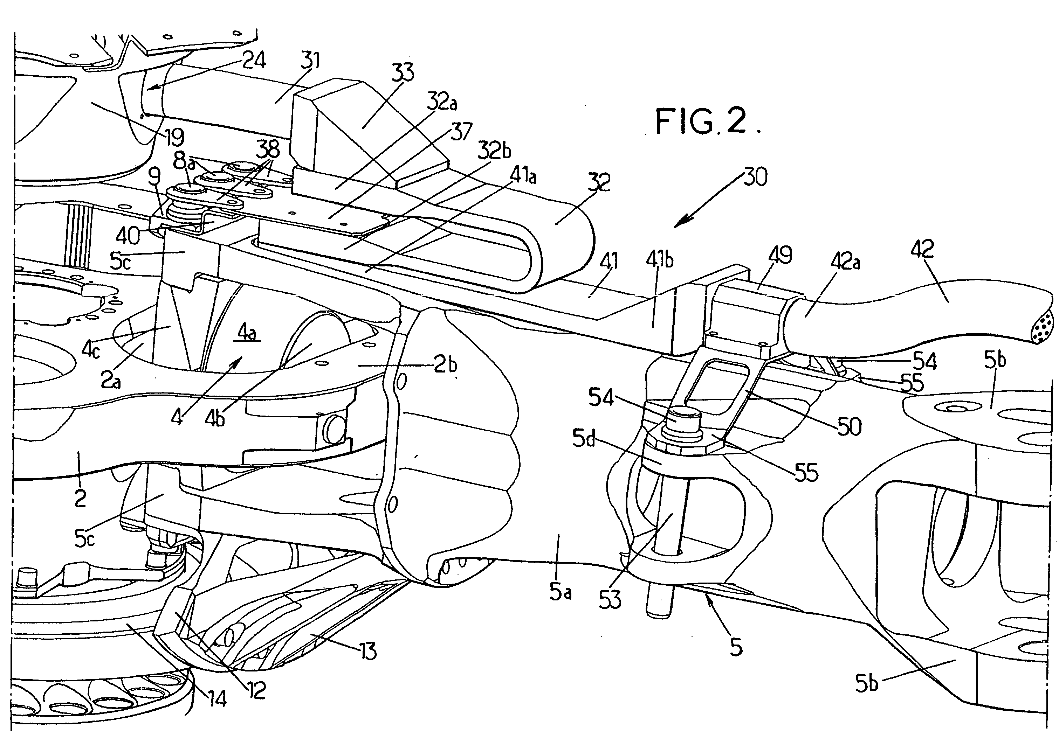

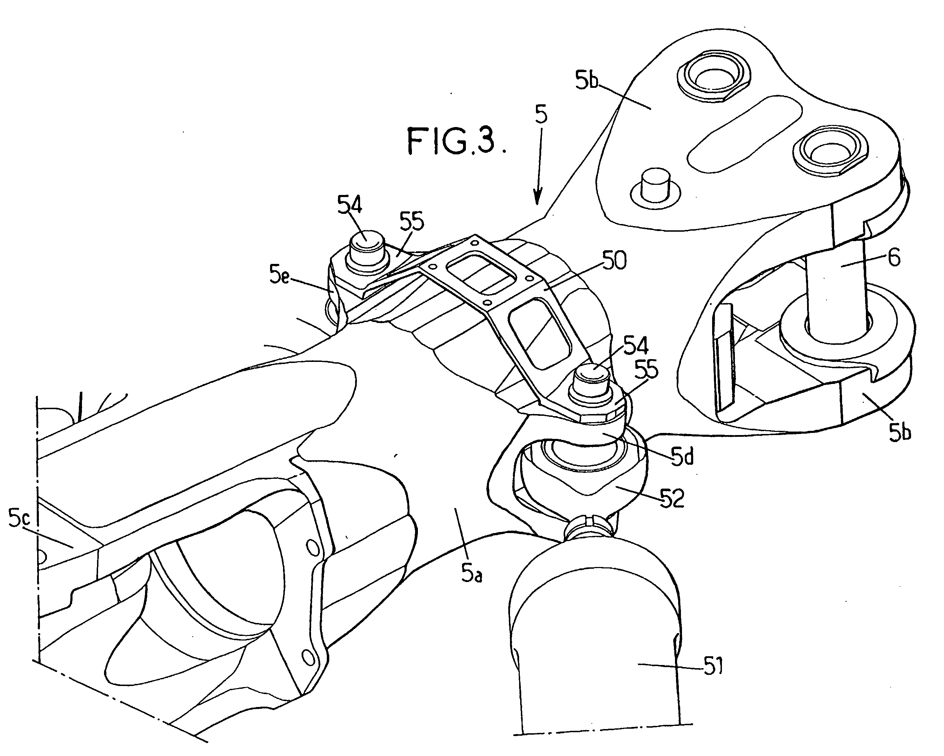

L'organe de liaison 5, appelé manchon dans la suite de la description car sa partie centrale 5a est tubulaire, comme visible sur les figures 2 et 3, est un organe disposé sensiblement radialement par rapport à l'axe A-A, et dont les parties d'extrémité externe et interne sont respectivement aménagées en chape externe 5b, à deux branches parallèles entre lesquelles est retenu le pied 3a de la pale 3, et en chape interne 5c, dont les deux branches parallèles assurent la liaison aux moyens de retenue et d'articulation 4.

De manière connue, le pied de pale 3a est retenu dans la chape externe 5b par deux broches 6 parallèles entre elles, symétriques de part et d'autre de l'axe longitudinal du manchon 5, et sensiblement perpendiculaires, à cet axe longitudinal. L'une des broches 6 est amovible, de sorte que la pale 3 peut être repliée manuellement, vers l'avant ou vers l'arrière de l'hélicoptère, après l'arrêt du rotor, par pivotement par rapport au manchon 5 autour de l'autre broche 6.

Comme également connu, les moyens de retenue et d'articulation 4 sont constitués d'une butée lamifiée sphérique, comprenant une partie centrale 4a, constituée d'un empilement alterné de couches d'un matériau élastiquement déformable et de coupelles d'un matériau rigide en forme de portions de sphères, entre, d'une part, une armature radiale externe 4b, chevauchant le bord radial externe 2b de l'alvéole 2a correspondant du moyeu 2, et fixé sur ce bord 2b du moyeu par des axes boulonnés tels que 7, et, d'autre part, une armature radiale interne 4c traversant l'alvéole 2a et fixée en entretoise entre les branches de la chape interne 5c par trois axes boulonnés tels que 8, dont les têtes de serrage 8a avec collerette maintiennent un talon supérieur 9 fixé sur l'extrémité radiale interne de la branche supérieure de la chape interne 5c, en regard d'un mécanisme 10 à butée haute de battement, éclipsable en vol, monté sur un support tubulaire 11 boulonné au-dessus de la partie centrale tubulaire du moyeu 2. Le dispositif à butée haute de battement 10 n'est pas davantage décrit, car il ne constitue pas une partie de l'invention. De manière analogue, les écrous 8b vissés sur les extrémités inférieures des axes 8 maintiennent un talon inférieur 12 fixé sous l'extrémité radiale interne de la branche inférieure de la chape interne 5c, ce talon inférieur 12 étant maintenu par une entretoise 13 boulonnée sur une bride inférieure du manchon 5 de sorte que le talon inférieur 12 est radialement en regard d'une butée basse de battement commune à toutes les pales et réalisée, de manière connue, sous la forme d'un anneau réciproque 14 monté avec un jeu radial autour du mât rotor 1.

Chaque pale 3 est équipée d'un dispositif de dégivrage ou d'anti-givrage (non représenté) comprenant un faisceau de fils électriquement conducteurs intégré dans la pale 3, à proximité du bord d'attaque de sa partie courante, et l'extrémité radiale interne de ce faisceau conducteur émerge sur la face supérieure de la pale 3, à proximité de son pied de pale 3a, sous la forme d'un câble de dégivrage schématisé en 15 et regroupant plusieurs conducteurs électriques allongés, dont un est schématisé en 16, du dispositif de dégivrage de la pale 3. Le câble de dégivrage 15, de structure classique comportant une gaine externe entourant les conducteurs 16 isolés les uns des autres, avec éventuellement interposition d'un blindage, doit être alimenté électriquement à partir d'un collecteur électrique 17, représenté schématiquement monté dans la partie centrale tubulaire du moyeu 2 et boulonné dans la base du support 11 fixé au moyeu 2. Pour chaque pale 3, la sortie du collecteur 17 est connectée à un câble d'alimentation électrique 18, de forme et structure classiques, par exemple de section circulaire et blindée, comprenant une gaine qui entoure un faisceau de fils conducteurs enveloppés dans une matière isolante, et le câble 18 est raccordé à l'embase blindée 25, munie d'une collerette de fixation carrée 26, d'un connecteur 24. Chacune des quatre embases 25 à collerette 26, à l'extrémité du câble d'alimentation 18 correspondant sortant librement du haut du collecteur 17, est mise en place dans un logement 19a correspondant ménagé dans la paroi d'un support de coupole annulaire 19, sur lequel chaque embase 25 est fixée par sa collerette 26, par exemple par quatre vis. Le support 19, d'une seule pièce en aluminium munie d'anneaux 20 d'élinguage à sa partie supérieure, supporte une coupole 21 profilée et rapportée par des boulons 29, et dont la partie centrale est obturée par un couvercle amovible 22 se fixant sur la coupole 21 par un mécanisme de fixation rapide 23, de type connu, tel que celui commercialisé sous la dénomination "CAMLOC". Pour permettre le montage du collecteur 17 dans son logement en passant par dessus, et après démontage du couvercle 22, le support 19 est évasé vers le haut, et directement monté sur le support tubulaire 11 de section interne appropriée. Le support évasé 19 de la coupole 21 avec couvercle 22 à démontage rapide présente l'avantage d'une maintenance rapide dans la pose et la dépose du collecteur 17 et des embases 25 des connecteurs 24, et pour l'accrochage à une élingue par les anneaux 20, pour la manutention du moyeu ou de l'hélicoptère complet.

Le raccordement électrique des conducteurs du câble d'alimentation 18 aux conducteurs tels que 16 du câble de dégivrage 15 de la pale 3 est assuré par un câble de connexion 30, de structure et de forme de section évolutives, qui comprend essentiellement quatre tronçons en série.

Le premier tronçon 31 est rectiligne, de structure classique ou blindée, de section circulaire, et disposé radialement, au-dessus de la chape interne 5c du manchon 5 correspondant, en étant orienté sensiblement selon la direction radiale de ce dernier, et l'extrémité radiale interne 31a du tronçon 31 est montée dans un raccord blindé 27 d'une fiche blindée 28 connectée dans l'embase 25 du connecteur 24. L'extrémité radiale externe du tronçon 31 se raccorde à une première extrémité 32a du second tronçon 32 par un raccord 33 de section évolutive, car le second tronçon 32 est constitué d'une partie allongée, de section transversale rectangulaire aplatie, et qui est repliée sur elle-même en demi-boucle aplatie formant une crosse aérienne à concavité tournée vers l'axe de rotation A-A, la crosse 32 s'étendant radialement comme le manchon 5, auquel elle est reliée par sa seconde extrémité 32b, à l'aplomb en-dessous de la première extrémité 32a, comme décrit ci-dessous.

La section rectangulaire de la crosse 32, de structure non blindée, est telle que celle représentée sur la figure 2a, les extrémités 32a et 32b étant simplement plus épaisses que la partie centrale allongée et recourbée en crosse. Ce tronçon de câble 32 comprend, selon la figure 2a et à titre d'exemple, neuf éléments conducteurs électriques allongés, tels que des fils de cuivre 34, qui s'étendent sensiblement parallèles et espacés les uns des autres en étant noyés dans une matrice de gainage 35 électriquement isolante et élastiquement déformable, par exemple en élastomère ou en caoutchouc naturel. Cette matrice 35 est confinée entre deux bandes de toile 36 constituant les grandes faces du tronçon de câble 32. Du fait de la disposition du tronçon en crosse 32, les grands côtés de sa section transversale rectangulaire sont sensiblement perpendiculaires à l'axe de rotation A-A du rotor. La toile 36, par exemple tissée avec une prédominance de fibres longitudinales de carbone ou aramide, donne à la structure une bonne résistance à la traction, qui est nécessaire du fait que ce tronçon de câble 32 est disposé pour être tendu par l'effet de la force centrifuge, lors de la rotation du rotor, afin de limiter les sollicitations parasites qui pourraient s'exercer sur ce tronçon de câble 32 par un effet de drapeau flottant au vent relatif, alors que la présence de la matrice élastiquement déformable 35, entre les conducteurs 34 et les bandes de toile 36 sur lesquelles cette matrice 35 est vulcanisée, procure une possibilité de glissement longitudinal relatif entre les conducteurs 34 et la toile 36, ce qui permet une certaine dissociation entre les contraintes mécaniques et les contraintes électriques. Bien que de faible masse, ce tronçon de câble 32 ainsi disposé en crosse aplatie est à la fois doté d'une bonne résistance en traction et d'une bonne souplesse de déformation en flexion et torsion, ce qui lui permet de s'accommoder des déplacements centrifuges comme des débattements angulaires en pas, battement et traînée du manchon 5 et de la pale 3 autour du centre d'articulation C de la butée lamifiée sphérique 4, ce centre C étant situé dans le rebord 2b correspondant du moyeu 2.

La liaison de l'extrémité 32b de la crosse 32 au manchon 5 est assurée à l'aide d'une tôle 37 surmoulée sur l'extrémité 32b ou fixée à celle-ci par des vis ou rivets, et cette tôle 37 sert de support des freins 38 des têtes de serrage 8a des axes boulonnés 8 de liaison de l'armature interne 4c sur les branches de la chape interne 5c. Des boulons 39 fixent simultanément les freins de tête 38 sur la tôle support 37 et cette dernière sur une aile d'une tôle contrecoudée 40 dont l'autre aile est appliquée contre la face supérieure de l'extrémité radiale interne de la branche supérieure de la chape interne 5c, en étant serrée contre cette dernière par le talon supérieur 9 et les axes boulonnés 8 qui la traversent.

L'extrémité 32b de la crosse 32 est également mécaniquement et électriquement raccordée à l'extrémité radiale interne 41a d'un troisième tronçon de câble 41, qui est rectiligne, s'étend radialement sur la face supérieure du manchon 5 jusqu'à son extrémité radiale externe, aménagée en raccord de section évolutive 41b, situé radialement à l'extérieur de la crosse 32, le tronçon de câble 41 ayant la même structure non blindée et la même forme de section rectangulaire aplatie que la crosse 32, comme représenté sur la figure 2a. La partie centrale du tronçon 41 est donc une partie allongée dont la plus grande dimension de sa section transversale rectangulaire est sensiblement perpendiculaire à l'axe de rotation du rotor, lorsque le manchon 5 est au repos.

Par le raccord de section évolutive 41b, le tronçon de câble rectiligne 41 est raccordé mécaniquement et électriquement à une première extrémité 42a du quatrième tronçon de câble 42, constituant une seconde crosse aérienne qui relie le manchon 5 à la pale 3, en étant raccordé par sa seconde extrémité 42b au câble de dégivrage 15 de la pale 3 par un second connecteur 43.

Ce connecteur 43 est blindé et comprend une embase 44 raccordée au câble de dégivrage 15 et munie d'une collerette 45, par laquelle l'embase blindée 44 est fixée sur un support 46 en saillie sur la partie supérieure du pied de pale 3a, en dehors de la zone de ce dernier qui est reçue dans la chape externe 5b du manchon 5. Le connecteur 43 comprend également une fiche 47, blindée, se connectant de manière amovible dans l'embase 44, et cette fiche 47 comporte un raccord 48 blindé dans lequel est montée l'extrémité 42b de la crosse 42, dont la section est circulaire et la structure blindée analogue à celle du premier tronçon de câble 31.

Ainsi, la première et la seconde crosses aériennes 32 et 42 du câble de connexion 30 relient le manchon 5 respectivement au moyeu 2 (par l'intermédiaire du premier tronçon de câblé 31) et à la pale 3, et le câble de connexion 30 est lié au manchon 5 à proximité de l'extrémité radiale interne 41a du tronçon 41 par une première liaison, assurée par la tôle 37, et à proximité de l'extrémité radiale externe 41b du tronçon 41 par une seconde liaison à présent décrite.

Cette seconde liaison comprend une bride métallique 49 (voir figure 2), en aluminium par exemple, surmoulée autour de l'extrémité 42a de la crosse 42 et fixée sur la partie centrale plane d'une attelle 50 en acier inoxydable par quatre boulons ou quatre vis coopérant avec des écrous prisonniers dans l'attelle 50, qui est disposée transversalement par-dessus le manchon 5 et fixée à demeure par ses extrémités sur ce dernier, au niveau des attaches sur le manchon 5 de deux amortisseurs de traînée tels que 51 (figure 3), reliant chacun le manchon 5 considéré à l'un respectivement des deux manchons 5 voisins, selon un montage d'amortisseurs interpales. Pour ces attaches à deux amortisseurs 51, chaque manchon 5 présente deux chapes latérales 5d et 5e en saillie sur les côtés opposés de la partie tubulaire 5a, c'est-à-dire dans une position située radialement à l'extérieur de la butée lamifiée sphérique 4. L'extrémité correspondante de chaque amortisseur de traînée 51 est constituée par un embout à rotule 52, retenu dans la chape latérale 5d ou 5e du côté correspondant par un axe d'articulation 53 à tête à collerette 54. L'attelle 50 est fixée sur le manchon 5 par ses deux extrémités 55 planes et percées, chacune retenue sur une chape 5d ou 5e par l'axe 53 d'articulation de l'amortisseur de traînée 51 correspondant, en étant maintenue entre la chape 5d ou 5e et la tête à collerette 54 correspondante, en servant ainsi de rondelle pour la tête 54 de l'axe 53. Ce montage permet de ne pas démonter les axes 53 de fixation des amortisseurs 51 pour déposer le câble de connexion 30, en désolidarisant la bride surmoulée 49 de l'attelle 50.

Comme représenté sur la figure 2, le tronçon de câble 41 peut être laissé libre entre les deux liaisons au manchon 5 qui sont voisines de ses extrémités, en particulier si la face supérieure du manchon 5 présente un revêtement protecteur en contact avec ce tronçon de câble 41.

Mais, pour éviter le frottement du tronçon 41 sur la partie supérieure du manchon 5, une liaison supplémentaire peut être réalisée, comme schématisé sur la figure 1, à l'aide de deux axes filetés 56 à tête fraisée traversant la paroi supérieure ou la branche supérieure de la chape interne 5c du manchon 5, pour fixer contre lui une plaque 57 servant de base à un palier 58 supplémentaire de fixation du tronçon de câble 41 sur le manchon 5, entre les deux liaisons décrites ci-dessus.

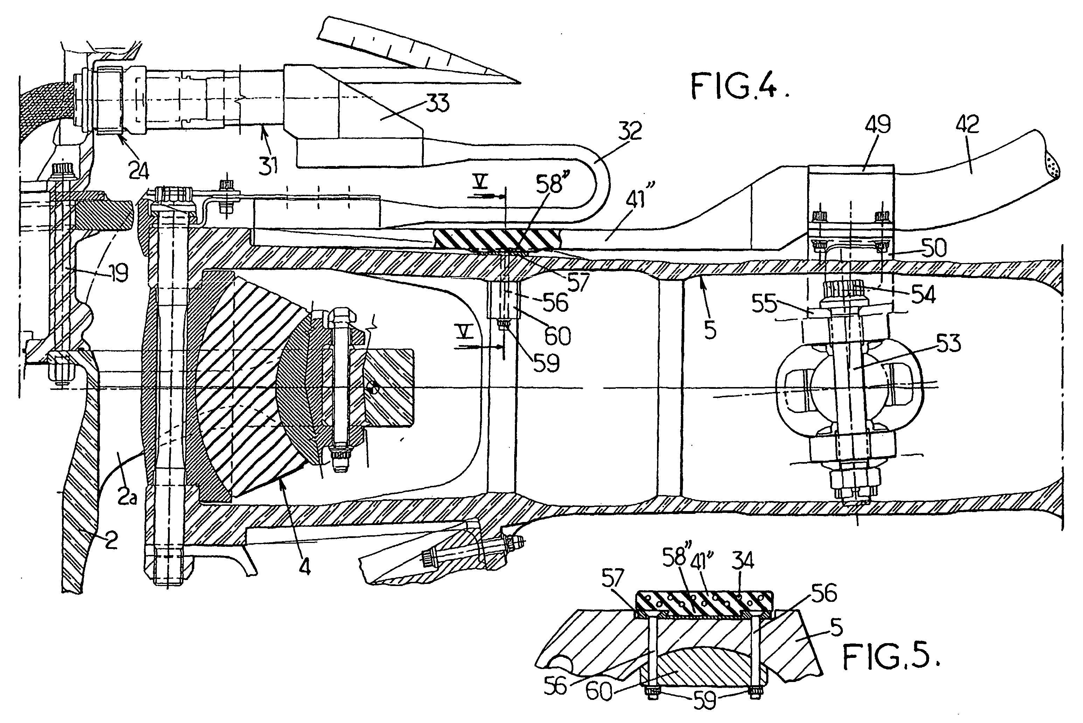

Un exemple préféré de réalisation de ce palier supplémentaire est représenté sur les figures 4 et 5, relatives à une variante de l'exemple précédemment décrit. Dans cette variante, les deux axes filetés 56 ont leur tête fraisée noyée dans les parties latérales de la plaque 57, de part et d'autre d'une rainure centrale en queue d'aronde ménagée dans cette plaque 57, qui est logée dans un évidement de la face supérieure du manchon 5, et les écrous 59, vissés sur les extrémités des axes filetés 56 traversant le manchon 5, sont serrés contre un support 60 traversé par les axes 56 et serré contre la face interne de cette paroi supérieure du manchon 5. Dans cette variante, le troisième tronçon de câble 41", qui comporte par exemple onze fils conducteurs 34, présente, dans la zone venant en regard de la plaque 57, une partie 58" en saillie sous sa face inférieure, et en forme de queue d'aronde, montée coulissante dans la direction radiale du manchon 5 dans l'évidement en queue d'aronde complémentaire de la plaque 57, de façon à réaliser un palier coulissant, permettant un maintien du tronçon de câble 41" avec une liberté de déplacement dans l'axe du manchon 5, mais sans possibilité de fouettement ou frottement transversal.

Dans une variante supprimant les axes 56, la plaque 57, les écrous 59 et le support 60, et lorsque la structure du manchon 5 le permet, la rainure en queue d'aronde recevant la saillie 58" du tronçon de câble 41" est directement réalisée dans la paroi supérieure du manchon 5.

Pour le reste, l'exemple des figures 4 et 5 ne diffère pas de celui des figures 1 à 3.

On réalise ainsi une installation de connexion de dégivrage avec un câble de connexion, dont le cheminement entre les deux connecteurs d'extrémité 24 et 43 est relativement direct et permet une disposition moins sollicitée, la structure et la forme de section des tronçons de câble étant adaptées aux lieux et aux sollicitations mécaniques locales, la seule zone fortement sollicitée étant celle de la première crosse aérienne 32, qui, du fait de sa disposition au plus près du centre d'articulation C de l'ensemble de la masse battante constituée par le manchon 5 et la pale 3 correspondante, du fait de son orientation et de sa structure souple en torsion et flexion, s'accommode bien des mouvements relatifs de la masse battante (3-5) et du moyeu 2 lors de la rotation du rotor et des mouvements en pas, traînée et battement de la masse battante. De plus, les efforts venant de cette crosse aérienne 32 sont repris sur la tôle support 37 des freins 39 des têtes d'axe 8a, et il est possible de déconnecter le tronçon de câble 31 avec la fiche 28 de l'embase 25, sans démontage particulier.

Pour limiter la longueur de la seconde crosse aérienne 42 du câble de connexion, son extrémité 42b montée dans le raccord 48 de la fiche 47 du connecteur 43 sera déconnectée de l'embase 44 de ce connecteur avant repliage de la pale 3 par rapport au manchon 5, puis reconnectée après remise de la pale 3 en configuration de vol. Ceci permet de limiter la longueur totale du câble de connexion, tandis que l'utilisation d'un câble de section circulaire classique dans les tronçons peu mobiles, à savoir le premier tronçon 31 et la seconde crosse 42, alors que la section du câble est rectangulaire et flexible dans la zone très sollicitée de la première crosse aérienne 32, permet d'adapter les tronçons du câble aux sollicitations mécaniques et aux lieux d'implantation.

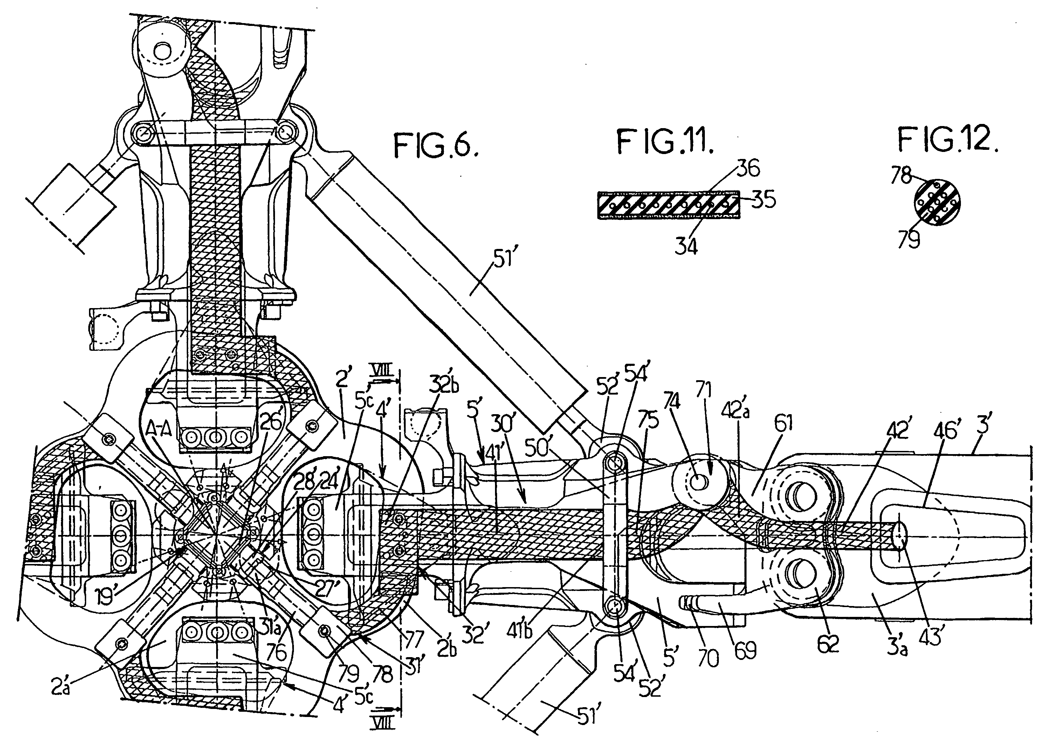

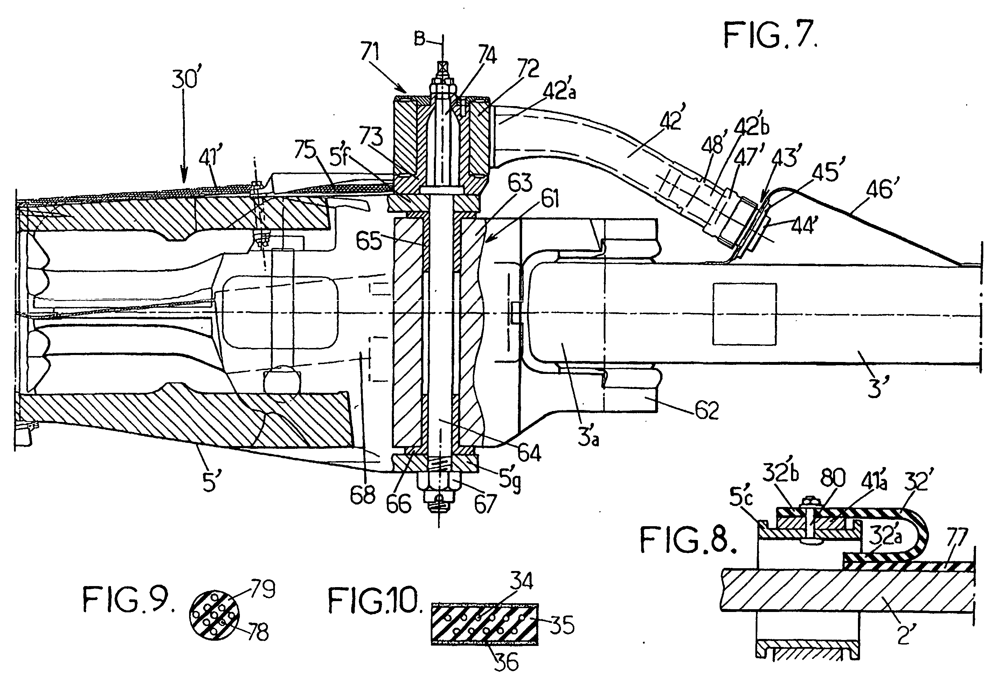

Le second exemple de réalisation des figures 6 et 7 ne se distingue essentiellement de celui précédemment décrit que par la réalisation du premier tronçon de câble, l'orientation et la disposition de la première crosse aérienne, et la réalisation du quatrième tronçon de câble avec un raccord tournant, car cet exemple d'installation de connexion de dégivrage équipe un rotor sur lequel chaque pale peut être automatiquement repliée par rapport à son manchon de liaison au moyeu, grâce à un actionneur disposé dans le manchon et faisant pivoter sur ce dernier une ferrure de repliage à laquelle la pale est fixée par son pied, de sorte que les éléments analogues sont repérés par les mêmes références numériques affectées du symbole prime.

Chaque pale 3' a son pied 3'a fixé par deux broches dans une chape 62 d'une ferrure de repliage 61, qui est montée pivotante sur la partie radiale externe du manchon 5' autour d'un axe géométrique de repliage B-B décalé latéralement par rapport à l'axe longitudinal du manchon 5', grâce à un palier cylindrique et latéral 63 sur un côté de la ferrure 61 et qui tourillonne autour d'un axe 64 de l'articulation de repliage. Ce palier 63 est retenu dans une chape radiale externe et latérale à branches supérieure 5'f et inférieure 5'g du manchon 5' par l'axe 64, autour duquel le palier 63 tourillonne grâce à des bagues épaulées 65 et 66 engagées autour de l'axe 64 et dans le palier 63, et chacune en appui contre une face respectivement supérieure et inférieure du palier 63, un écrou 66 étant vissé et retenu sur l'extrémité inférieure filetée de l'axe 64 qui fait saillie sous la branche inférieure 5'g de chape. L'axe 64 est coaxial à l'axe de pivotement B-B pour obtenir, par la manoeuvre d'un actionneur, schématisé en 68 sur la figure 7 et fixé par son corps dans le manchon 5' par tout moyen approprié, de faire pivoter la ferrure 61. Du côté opposé au palier coaxial 63, la ferrure 61 présente une butée 69, tournée vers le manchon 5', et venant se loger dans un logement 70, ouvert radialement vers l'extérieur de ce manchon 5', en position de la ferrure 61 non repliée par l'actionneur 68, et qui correspond à la configuration de vol (voir figure 6). La manoeuvre de l'actionneur 68 permet de manière connue, de faire pivoter la ferrure 61 et la pale 3' d'un angle maximum de par exemple 135° autour de l'axe B-B.

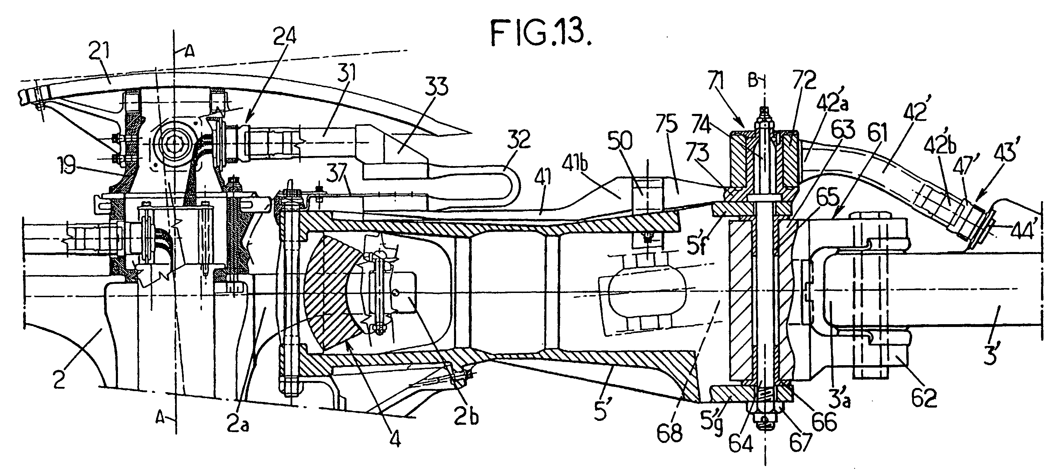

Dans ce cas, pour limiter la longueur de la seconde crosse aérienne 42' du câble de connexion 30' sans avoir à déconnecter la fiche 47', montée sur son extrémité 42'b, de l'embase 44' du connecteur 43' monté sur la pale 3' pour le raccordement du câble de connexion 30' au câble de dégivrage, avant de replier la pale 3' avec la ferrure 61 par rapport au manchon 5', l'extrémité 42'a de la crosse 42' qui est liée au manchon 5' est solidaire d'une partie tournante 72, montée rotative autour d'une partie fixe 73 d'un raccord tournant 71, dont les parties tournante 72 et fixe 73 sont coaxiales autour de l'axe de pivotement B-B, grâce à un prolongateur d'axe 74 fixé sur l'axe 64. La partie fixe 73 du raccord tournant 71 est fixée sur le manchon 5' et raccordée électriquement et mécaniquement au troisième tronçon 41' du câble 30' par un court tronçon de câble 75. Ce dernier a sensiblement la même forme de section transversale rectangulaire aplatie que le tronçon 41', comme représenté sur la figure 11, et sa structure peut être la même structure non blindée que celle du tronçon 41', avec des fils conducteurs 34 noyés dans une matrice 35 isolante et élastiquement déformable, entre des bandes de toile 36, comme pour les tronçons 41 et 32 du premier exemple (voir figure 2a). Le raccordement entre le tronçon 75 et le tronçon 41' est effectué au niveau de l'attelle 50' de retenue du câble 30' sur le manchon 5' par fixation sur les axes 54' d'attache des amortisseurs de traînée 51' au manchon 5'.

Ainsi, lorsque l'actionneur 68 commande le pivotement de la ferrure 61 avec la pale 3' autour de l'axe B-B, la crosse aérienne 42' du câble 30' tourne avec la partie tournante 72 du raccord tournant 71 autour de ce même axe B-B, en même temps que la pale 3', ce qui rend inutile toute intervention sur le connecteur 43'.

Dans cet exemple, le premier tronçon de câble 31' est constitué de deux parties 76 et 77 en série, dont la partie 76 est rectiligne et présente la même structure blindée et la même section transversale circulaire que le tronçon de câble 31 de l'exemple précédent, comme représenté sur la figure 9, qui montre un faisceau de fils conducteurs 78 isolés les uns des autres dans une gaine blindée 79, et qui est analogue à la figure 12, représentant en coupe la crosse aérienne 42', de mêmes section et structure que la crosse 42 du premier exemple. Cette partie 76 s'étend radialement sur le moyeu 2', entre deux alvéoles voisins 2'a du moyeu 2', donc entre les chapes internes 5'c et les butées lamifiées sphériques 4' de deux manchons 5' voisins, et son extrémité radiale interne 31'a est, comme l'extrémité correspondante 31a du tronçon 31 de l'exemple précédent, montée dans le raccord 27' de la fiche 28' d'un connecteur blindé 24', dont l'embase 25' est, d'une part, fixée par sa collerette carrée 26' sur un support désigné dans son ensemble en 19' et monté sur la partie centrale tubulaire du moyeu 2', et, d'autre part, raccordée mécaniquement et électriquement à un câble d'alimentation électrique (non représenté) à plusieurs conducteurs connectés à la sortie d'un collecteur (également non représenté) logé dans la partie centrale tubulaire du moyeu 2'.

L'extrémité radiale externe de cette partie radiale 76 est aménagée en raccord 78, fixé au moyeu 2' par une vis 79 pour former une liaison du câble 30' au moyeu 2', et le raccord 78 assure également le raccordement électrique et mécanique de la partie radiale 76 à l'autre partie 77. Cette dernière présente une section transversale rectangulaire aplatie, de plus grande dimension sensiblement perpendiculaire à l'axe du rotor, et une structure non blindée qui sont analogues à celles des tronçons de câble 41' et 75 de cet exemple, et 32 et 41 de l'exemple précédent, et comme représenté par la figure 10, qui montre les fils conducteurs électriques 34, sensiblement parallèles et espacés, et noyés en deux rangées superposées dans la matrice isolante et élastiquement déformable 35 entre des bandes de toile 36.

Cette partie de câble 77 repose à plat sur le moyeu 2' et s'étend sensiblement en arc-de-cercle, en direction sensiblement circonférentielle autour de l'axe de rotation du rotor, sur le rebord radial externe 2'b de l'un des deux alvéoles 2'a entre lesquels s'étend la partie radiale 76. Cette partie 77 s'étend sensiblement jusqu'au bord latéral le plus proche de la chape interne 5'c du manchon 5' retenu sur ce rebord 2'b, sur lequel cette partie de câble 77 se raccorde électriquement et mécaniquement à la première extrémité 32'a de la première crosse aérienne 32' reliant le moyeu 2' au manchon 5'. Comme représenté sur la coupe de la figure 8, cette crosse 32'a est orientée sensiblement en direction circonférentielle, c'est-à-dire sensiblement transversalement par rapport au manchon 5', auquel elle est reliée par sa seconde extrémité 32'b, qui est raccordée électriquement et mécaniquement à l'extrémité radiale interne 41'a du troisième tronçon de câble 41', et fixée avec cette extrémité 41'a sur la face supérieure de la branche supérieure de la chape interne 5'c par un boulon 80. La crosse 32' est formée d'une partie allongée de câble conducteur ayant les mêmes forme de section rectangulaire aplatie et structure non blindée que le tronçon 41', et comme représenté par la coupe de la figure 11, et ce tronçon allongé est replié en demi boucle aplatie à concavité tournée vers l'intérieur de la chape interne 5'c du manchon 5' correspondant, sa première extrémité 32'a étant liée au moyeu 2' simultanément avec l'extrémité qu'elle recouvre de la partie de câble en arc-de-cercle 77, tandis que son autre extrémité 32'b recouvre transversalement l'extrémité 41'a du tronçon de câble 41' en étant fixée avec elle par le boulon 80 à la partie supérieure du manchon 5'.

Du fait de sa constitution et de sa disposition, cette crosse 32' présente une flexibilité en torsion et flexion qui lui permet de s'accommoder des déplacements relatifs du manchon 5' et du moyeu 2' sous l'effet des forces centrifuges sollicitant la pale 3' et le manchon 5' lorsque le rotor tourne, et des débattements angulaires en pas, traînée et battement de la pale 3' et du manchon 5'.

Ce second exemple de câble de connexion 30' comprend également des tronçons de câble dont les sections et structures sont adaptées aux contraintes locales et lieux d'implantation, avec toutefois, par rapport au premier exemple, l'inconvénient d'une liaison moins directe entre le moyeu et la pale, du fait de la réalisation du premier tronçon 31' en deux parties 76 et 77, dont l'une 76 est radiale et l'autre 77 en arc-de-cercle en direction sensiblement circonférentielle, mais avec l'avantage correspondant d'un moindre encombrement dans la direction de l'axe du rotor, au niveau de cette partie radiale 76, qui peut reposer directement sur le moyeu 2', alors que le premier tronçon radial 31 de câble du premier exemple est suspendu, en porte-à-faux, au-dessus du manchon correspondant.

Le troisième exemple, représenté sur la figure 13, est identique à l'exemple des figures 1 et 2 dans ses premier, second et troisième tronçons de câble 31, 32 et 41, c'est-à-dire du premier connecteur 24 de liaison au support 19 de coupole 21 qui est fixé sur le moyeu 2, jusqu'à l'attelle 50 de reprise sur les chapes latérales d'articulation des amortisseurs de traînée sur le manchon correspondant, alors que de l'attelle 50 jusqu'à la pale 3', le câble de connexion est identique à celui du second exemple des figures 6 et 7, et comprend une seconde crosse aérienne 42', dont la seconde extrémité 42'b est raccordée à la fiche 47' du second connecteur 43' dont l'embase 44' est fixée sur la pale 3' et connectée au câble de dégivrage de cette dernière, tandis que la première extrémité 42'a de la crosse 42' est solidaire en rotation de la partie tournante 72 d'un raccord tournant 71, dont la partie fixe 73 est raccordée électriquement et mécaniquement, au niveau de l'attelle 50, au tronçon de câble 41. En effet, dans ce troisième exemple également, le pied de la pale 3' est retenu dans une chape 62 d'une ferrure de repliage 61 articulée à pivotement autour de l'axe B-B sur le manchon par un actionneur de repliage 68, les parties tournante 72 et fixe 73 du raccord tournant 71 étant coaxiales autour de cet axe de repliage B-B. Pour cette raison, les mêmes références que dans les exemples précédents ont été utilisées pour désigner les éléments analogues.

Il est clair que ce troisième exemple de câble de connexion présente les avantages respectifs procurés par les parties des deux exemples antérieurs qu'il reprend.

## Revendications

1. Rotor de giravion avec une installation de connexion électrique entre au moins un conducteur d'alimentation électrique (18) et un dispositif électrique de dégivrage (15) d'une pale (3, 3') du rotor, lequel est du type comprenant :
- un moyeu (2, 2'), solidaire en rotation d'un mât rotor (1) autour d'un axe (A-A) de rotation du rotor, et
- au moins deux pales (3, 3'), dont chacune est reliée au moyeu (2, 2') par l'intermédiaire d'un organe de liaison (5, 5') sensiblement radial par rapport à l'axe de rotation (A-A) et lui-même relié au moyeu (2, 2') par des moyens de retenue et d'articulation (4, 4'), l'installation de connexion comprenant au moins un câble de connexion (30, 30') à au moins un élément conducteur électrique allongé (34, 78), raccordant ledit conducteur d'alimentation (18) porté par le moyeu (2, 2') à au moins un conducteur électrique (16) dudit dispositif de dégivrage (15) porté par la pale (3, 3') ,
**caractérisé en ce que** le câble de connexion (30, 30') comprend un premier tronçon (31, 31'), dont une première extrémité (31a, 31'a), en position radiale interne, est reliée audit conducteur d'alimentation (18) du moyeu (2, 2') par un premier connecteur (24, 24') monté sur le moyeu (2, 2'), et dont la seconde extrémité se raccorde à une première extrémité (32a, 32'a) d'un second tronçon du câble de connexion (30, 30'), ledit second tronçon comprenant une première crosse aérienne (32, 32'), en forme de demi-boucle aplatie, et sa seconde extrémité (32b, 32'b) étant reliée audit conducteur de dégivrage (16) de ladite pale (3, 3') par un second connecteur (43, 43'), implanté sur la partie supérieure de la pale (3, 3'), au moins ladite première crosse (32, 32') ayant une structure non blindée et présentant une partie allongée de section transversale sensiblement rectangulaire aplatie, dont la plus grande dimension est sensiblement perpendiculaire à l'axe de rotation (A-A), ainsi qu'une concavité tournée sensiblement vers lesdits moyens de retenue et d'articulation (4, 4'), ladite première crosse (32, 32') étant déformable en flexion et torsion pour s'accommoder des débattements angulaires en pas, traînée et battement de la pale (3, 3') et de son organe de liaison (5, 5') par rapport au moyeu (2, 2').

2. Rotor selon la revendication 1, **caractérisé en ce que** ladite seconde extrémité (32b, 32'b) dudit second tronçon de câble (32, 32') est reliée audit second connecteur (43, 43') en étant raccordée à une première extrémité (41a, 41'a) d'un troisième tronçon (41, 41') de câble de connexion (30, 30'), s'étendant sensiblement radialement sur l'organe de liaison (5, 5') correspondant, auquel il est fixé par au moins une première (37, 80) et une seconde liaisons (50, 50') respectivement à proximité de ses première (41a, 41'a) et seconde extrémités (41b, 41'b) en position respectivement radiales interne et externe, le troisième tronçon (41, 41') étant relié par sa seconde extrémité (41b, 41'b) audit second connecteur (43, 43'), et ayant également une structure non blindée, présentant une partie allongée de section transversale sensiblement rectangulaire aplatie, dont la plus grande dimension est sensiblement perpendiculaire à l'axe de rotation (A-A).

3. Rotor selon l'une des revendications 1 et 2,
**caractérisé en ce que** ladite partie allongée de la première crosse (32, 32') et/ou du troisième tronçon (41, 41') du câble de connexion (30, 30') comprend plusieurs éléments conducteurs électriques allongés (34), sensiblement parallèles entre eux, espacés les uns des autres et noyés dans une matrice (35) de gainage isolante et élastiquement déformable entre des bandes de toile (36) sur les grands côtés de sa section transversale sensiblement rectangulaire.

4. Rotor selon l'une des revendications 2 et 3,
**caractérisé en ce que** chaque organe de liaison (5, 5') est distinct du pied (3a, 3'a) de la pale (3, 3') correspondante, et comporte une partie radiale externe agencée en chape externe (5b, 62) dans laquelle ledit pied de pale (3a, 3'a) est retenu, la seconde extrémité (41b, 41'b) du troisième tronçon de câble (41, 41') étant reliée audit second connecteur (43, 43') en étant raccordée à une première extrémité d'un quatrième tronçon de câble, comprenant une seconde crosse aérienne (42, 42') s'étendant dudit organe de liaison (5, 5') à la pale (3, 3'), et dont la seconde extrémité (42b, 42'b) est raccordée audit second connecteur (43, 43').

5. Rotor selon la revendication 4, **caractérisé en ce que** la seconde crosse (42, 42') du câble de connexion (30, 30') présente une section transversale arrondie, et éventuellement une structure blindée, et le second connecteur (43, 43') comprend, d'une part, une embase (44, 44') raccordée audit conducteur de dégivrage (16) de la pale (3, 3'), et munie d'une collerette (45, 45') de fixation sur la pale (3, 3'), et, d'autre part, une fiche (47, 47') connectée sur l'embase (44, 44') et munie d'un raccord (48, 48') monté sur la seconde extrémité (42b, 42'b) dudit quatrième tronçon de câble (42, 42') relié à la pale (3, 3').

6. Rotor selon l'une des revendications 4 et 5,
**caractérisé en ce que** le pied (3a) de chaque pale (3) est retenu dans ladite chape externe (5b) de l'organe de liaison (5) correspondant par deux broches (6) sensiblement parallèles entre elles, et dont l'une est amovible pour permettre le repliage de la pale (3) par rapport à l'organe de liaison (5) par pivotement autour de l'autre broche (6), la fiche (46) du second connecteur (43) sur la seconde extrémité (42b) du quatrième tronçon de câble (42) se connectant de façon amovible à l'embase (44) correspondante, fixée sur la pale (3), du second connecteur (43).

7. Rotor selon l'une des revendications 4 et 5,
**caractérisé en ce que**, pour chaque organe de liaison, ladite chape externe (62) retenant le pied (3'a) de la pale (3') correspondante est agencée dans une ferrure de repliage (61), constituant la partie radiale externe de l'organe de liaison (5'), et montée sur ce dernier par une liaison pivotante (63-64) autour d'un axe de repliage (B-B) de la pale (3') avec la ferrure (61) par rapport audit organe de liaison (5'), la seconde crosse (42') du câble de connexion (30) s'étendant du second connecteur (43'), sur la pale (3'), à une partie tournante (72) d'un raccord tournant (71) comprenant également une partie fixe (73) sur l'organe de liaison (5'), et sur laquelle la partie tournante (72) est montée rotative coaxialement à la liaison pivotante (63-64) de la ferrure de repliage (61) sur l'organe de liaison (5'), la partie fixe (73) du raccord tournant (71) étant reliée à la seconde extrémité (41'b), radiale externe, du troisième tronçon de câble (41') par une partie (75) du quatrième tronçon de câble (75-41') qui s'étend sur l'organe de liaison (5').

8. Rotor selon l'une quelconque des revendications 1 à 7, **caractérisé en ce que** le premier tronçon de câble (31, 31') comprend au moins une partie radiale de section transversale arrondie, éventuellement de structure blindée, dont l'extrémité radiale interne (31a, 31'a) est montée dans un raccord (27, 27') d'une fiche (28, 28') du premier connecteur (24, 24'), ladite fiche (28, 28') étant complémentaire d'une embase (25, 25') du premier connecteur (24, 24') qui est raccordée au conducteur d'alimentation (18) sur le moyeu (2, 2') et munie d'une collerette (26, 26') montée sur le moyeu (2, 2').

9. Rotor selon la revendication 8, **caractérisé en ce que** la partie radiale du premier tronçon de câble (31) s'étend sur sensiblement toute la longueur du premier tronçon (31), au-dessus de l'organe de liaison (5) et sensiblement dans la même direction radiale que ce dernier, la première crosse (32) du câble étant à concavité tournée sensiblement radialement vers l'axe de rotation (A-A).

10. Rotor selon la revendication 8, **caractérisé en ce que** la partie radiale (76) du premier tronçon de câble (31') s'étend entre deux organes de liaison (5') voisins du rotor, et l'extrémité radiale externe (78) de cette partie radiale (76) est, d'une part, fixée au moyeu (2') par une liaison (79) et, d'autre part, prolongée vers la première crosse (32') du câble (30' ) par une partie (77) de premier tronçon (31') s'étendant en direction sensiblement circonférentielle sur le moyeu (2') et de section transversale sensiblement rectangulaire aplatie, dont la plus grande dimension est sensiblement perpendiculaire à l'axe de rotation (A-A), la première crosse (32') étant à concavité tournée en direction sensiblement circonférentielle vers l'organe de liaison (5') correspondant.

11. Rotor selon l'une quelconque des revendications 5 à 10, **caractérisé en ce qu'**au moins une partie de section arrondie (31, 42) du câble (30) se raccorde à au moins une partie (32, 41) de section sensiblement rectangulaire aplatie par un raccord de section évolutive (33, 41b).

12. Rotor selon l'une quelconque des revendications 1 à 11, **caractérisé en ce qu'**au moins une liaison (49, 50) du câble de connexion (30) à l'organe de liaison (5) comprend une bride de liaison (49) surmoulée sur le câble de connexion (30) .

13. Rotor selon l'une quelconque des revendications 2 à 12, **caractérisé en ce que** la partie radiale interne de chaque organe de liaison (5) est agencée en chape interne (5c) et les moyens de retenue et d'articulation (4) correspondants comprennent une armature (4c) fixée entre les branches de la chape interne (5c) par des axes boulonnés (8) à tête (8a) freinée par des freins de tête (38), la première liaison du câble de connexion (30) à l'organe de liaison (5) étant assurée à l'aide d'au moins un support (37) desdits freins de tête (38), ledit support (37) étant lui-même retenu sur l'organe de liaison (5) par l'un au moins desdits axes boulonnés (8).

14. Rotor selon l'une quelconque des revendications 2 à 13, **caractérisé en ce que** chaque organe de liaison (5, 5') est relié au moyeu (2, 2') ou aux organes de liaison (5, 5') voisins par deux amortisseurs de traînée (51, 51') articulés chacun par une extrémité (52) dans l'une respectivement de deux chapes (5d, 5e) en saillie latéralement sur les côtés opposés de l'organe de liaison (5, 5'), radialement à l'extérieur des moyens de retenue et d'articulation (4, 4') correspondants, la seconde liaison du câble de connexion (30, 30') à l'organe de liaison (5, 5') étant assurée à l'aide d'une attelle (50, 50') disposée transversalement sur l'organe de liaison (5, 5') sur lequel elle est retenue par des axes (53-54) de retenue des amortisseurs de traînée (51, 51') dans lesdites chapes latérales (5d, 5e).

15. Rotor selon la revendication 14, **caractérisé en ce que** le câble de connexion (30) comporte, en regard de l'attelle (50), une bride (49) surmoulée fixée sur l'attelle (50).

16. Rotor selon l'une quelconque des revendications 2 à 15, **caractérisé en ce que** le câble de connexion est fixé à l'organe de liaison (5) par une liaison supplémentaire, intermédiaire entre les première (37) et seconde liaisons (50), la liaison supplémentaire étant assurée par un palier coulissant comprenant une partie (58") en saillie sous le troisième tronçon de câble (41") et en forme de queue d'aronde, et qui est montée coulissante dans la direction radiale de l'organe de liaison (5), dans un évidement en queue d'aronde complémentaire aménagé dans la partie supérieure de l'organe de liaison (5).

17. Rotor selon la revendication 16, **caractérisé en ce que** l'évidement en queue d'aronde est aménagé dans une plaque (57) de palier coulissant, fixée sur le dessus de l'organe de liaison (5).

18. Rotor selon la revendication 16, **caractérisé en ce que** l'évidement en queue d'aronde est aménagé directement dans la partie supérieure de l'organe de liaison (5).

## Patentansprüche

1. Drehflüglerrotor mit einer Einrichtung zur elektrischen Verbindung zwischen wenigstens einem elektrischen Speiseleiter (18) und einer elektrischen Vorrichtung (15) zur Enteisung eines Blattes (3, 3') des Rotors, welcher von einer Gattung ist, die umfaßt:
- eine Nabe (2, 2'), die mit einem Rotormast (1) um eine Drehachse (A-A) des Rotors drehvereint ist, und
- zumindest zwei Blätter (3, 3'), von denen jedes mit der Nabe (2, 2') mittels eines Verbindungsorgans (5, 5') verbunden ist, das in bezug auf die Drehachse (A-A) im wesentlichen radial ist und seinerseits mit der Nabe (2, 2') durch Halte- und Gelenkmittel (4, 4') verbunden ist,
wobei die Verbindungseinrichtung wenigstens ein Verbindungskabel (30, 30') zu wenigstens einem länglichen, elektrisch leitfähigen Element (34, 78) enthält, das den durch die Nabe (2, 2') getragenen Speiseleiter (18) mit wenigstens einem elektrischen Leiter (16) der vom Blatt (3, 3') getragenen Enteisungsvorrichtung (15) verbindet,
**dadurch gekennzeichnet, daß** das Verbindungskabel (30, 30') einen ersten Abschnitt (31, 31') umfaßt, von dem ein erstes Ende (31a, 31'a) bei innerer radialer Stellung mit dem Speiseleiter (18) der Nabe (2, 2') durch einen ersten Verbinder (24, 24') verbunden ist, der an der Nabe (2, 2') angebracht ist, und von dem das zweite Ende sich an ein erstes Ende (32a, 32'a) eines zweiten Abschnitts des Verbindungskabels (30, 30') anschließt, wobei der zweite Abschnitt eine erste Lufttraverse (32, 32') in Form einer flachen Halbschleife enthält und sein zweites Ende (32b, 32'b) mit dem Enteisungsleiter (16) des Blattes (3, 3') durch einen zweiten Verbinder (43, 43') verbunden ist, der auf dem oberen Teil des Blattes (3, 3') eingesetzt ist, wobei wenigstens die erste Traverse (32, 32') einen ungeschirmten Aufbau hat und einen länglichen Teil von im wesentlichen flachem rechteckförmigen Querschnitt, dessen größere Abmessung im wesentlichen senkrecht zur Drehachse (A-A) ist, sowie eine im wesentlichen zu den Halte- und Gelenkmitteln (4, 4') hin gewandte Konkavität aufweist, wobei die erste Traverse (32, 32') biegungs- und verwindungsverformbar ist, um sich den anstellungs-, widerstands- und schlagbedingten Winkelausschlägen des Blattes (3, 3') und seines Verbindungsorgans (5, 5') in bezug auf die Nabe (2, 2') anzupassen.

2. Rotor nach Anspruch 1, **dadurch gekennzeichnet, daß** das zweite Ende (32b, 32'b) des zweiten Kabelabschnitts (32, 32') mit dem zweiten Verbinder (43, 43') verbunden ist, indem es an ein erstes Ende (41a, 41'a) eines dritten Abschnitts (41, 41') des Verbindungskabels (30, 30') angeschlossen ist, der sich im wesentlichen radial auf dem entsprechenden Verbindungsorgan (5, 5') erstreckt, an welchem er durch wenigstens eine erste (37, 80) bzw. zweite Verbindung (50, 50') in der Nähe seines ersten (41a, 41'a) bzw. zweiten Endes (41b, 41'b) in innerer bzw. äußerer radialer Position befestigt ist, wobei der dritte Abschnitt (41, 41') durch sein zweites Ende (41b, 41'b) mit dem zweiten Verbinder (43, 43') verbunden ist und auch einen ungeschirmten Aufbau hat, der einen länglichen Teil von im wesentlichen flachem rechteckförmigen Querschnitt aufweist, dessen größere Abmessung im wesentlichen senkrecht zur Drehachse (A-A) ist.

3. Rotor nach einem der Ansprüche 1 und 2, **dadurch gekennzeichnet, daß** der längliche Teil der ersten Traverse (32, 32') und/oder des dritten Abschnitts (41, 41') des Verbindungskabels (30, 30') mehrere längliche elektrische Leiterelemente (34) umfaßt, die zueinander im wesentlichen parallel sind, voneinander einen Abstand aufweisen und in einer isolierenden und elastisch verformbaren Einhüllmatrix (35) zwischen Stoffbändern (36) an den Breitseiten ihres/seines im wesentlichen rechteckförmigen Querschnitts eingebettet sind.

4. Rotor nach einem der Ansprüche 2 und 3, **dadurch gekennzeichnet, daß** jedes Verbindungsorgan (5, 5') vom Fuß (3a, 3'a) des entsprechenden Blattes (3, 3') unterschieden ist und einen äußeren radialen Teil enthält, der als äußerer Gabelkopf (5b, 62) ausgebildet ist, in dem der Blattfuß (3a, 3'a) gehalten ist, wobei das zweite Ende (41b, 41'b) des dritten Kabelabschnitts (41, 41') mit dem zweiten Verbinder (43, 43') verbunden ist, indem es mit einem ersten Ende eines vierten Kabelabschnitts verbunden ist, das eine zweite Lufttraverse (42, 42') enthält, die sich vom Verbindungsorgan (5, 5') zum Blatt (3, 3') erstreckt und deren zweites Ende (42b, 42'b) mit dem zweiten Verbinder (43, 43') verbunden ist.

5. Rotor nach Anspruch 4, **dadurch gekennzeichnet, daß** die zweite Traverse (42, 42') des Verbindungskabels (30, 30') einen runden Querschnitt und unter Umständen einen geschirmten Aufbau aufweist und der zweite Verbinder (43, 43') einerseits einen Sockel (44, 44'), der an den Enteisungsleiter (16) des Blattes (3, 3') angeschlossen und mit einem Befestigungskragen (45, 45') am Blatt (3, 3') versehen ist, und andererseits einen Stecker (47, 47') enthält, der mit dem Sockel (44, 44') verbunden und mit einem Kuppelstück (48, 48') versehen ist, das am zweiten Ende (42b, 42'b) des vierten Kabelabschnitts (42, 42') angebracht ist, der mit dem Blatt (3, 3') verbunden ist

6. Rotor nach einem der Ansprüche 4 und 5, **dadurch gekennzeichnet, daß** der Fuß (3a) jedes Blattes (3) im äußeren Gabelkopf (5b) des entsprechenden Verbindungsorgans (5) durch zwei Stifte (6) gehalten wird, die zueinander im wesentlichen parallel sind und von denen der eine lösbar ist, um das Klappen des Blattes (3) in bezug auf das Verbindungsorgan (5) durch Schwenkung um den anderen Stift (6) zu ermöglichen, wobei der Stecker (47) des zweiten Verbinders (43) am zweiten Ende (42b) des vierten Kabelabschnitts (42) in lösbarer Weise an dem am Blatt (3) befestigten, entsprechenden Sockel (44) des zweiten Verbinders (43) angeschlossen ist.

7. Rotor nach einem der Ansprüche 4 und 5, **dadurch gekennzeichnet, daß** für jedes Verbindungsorgan der äußere Gabelkopf (62), der den Fuß (3'a) des entsprechenden Blattes (3') hält, in einem Klappbeschlag (61) angeordnet ist, der den äußeren radialen Teil des Verbindungsorgans (5') bildet und an diesem letzteren durch eine Schwenkverbindung (63-64) um die Klappachse (B-B) des Blattes (3') herum mit dem Beschlag (61) in bezug auf das Verbindungsorgan (5') angebracht ist, wobei sich die zweite Traverse (42') des Verbindungskabels (30) vom zweiten Verbinder (43') am Blatt (3') zu einem Drehteil (72) einer Drehkupplung (71) erstreckt, die auch ein festes Teil (73) am Verbindungsorgan (5') umfaßt und auf der das Drehteil (72) koaxial drehbar an der Schwenkverbindung (63-64) des Klappbeschlages (61) am Verbindungsstück (5') angebracht ist, wobei das feste Teil (73) der Drehkupplung (71) mit dem zweiten, äußeren radialen Ende (41'b) des dritten Kabelabschnitts (41') durch einen Teil (75) des vierten Kabelabschnitts (75-41') verbunden ist, der sich auf dem Verbindungsorgan (5') erstreckt.

8. Rotor nach einem der Ansprüche 1 bis 7, **dadurch gekennzeichnet, daß** der erste Kabelabschnitt (31, 31') wenigstens einen radialen Teil von rundem Querschnitt unter Umständen von geschirmtem Aufbau enthält, dessen inneres radiales Ende (31a, 31'a) in einem Kupplungsstück (27, 27') eines Steckers (28, 28') des ersten Verbinders (24, 24') angebracht ist, wobei der Stecker (28, 28') zu einem am Speiseleiter (18) an der Nabe (2, 2') angeschlossenen und mit einem an der Nabe (2, 2') angebrachten Kragen (26, 26') versehenen Sockel (25, 25') des ersten Verbinders (24, 24') komplementär ist.

9. Rotor nach Anspruch 8, **dadurch gekennzeichnet, daß** sich der radiale Teil des ersten Kabelabschnitts (31) über im wesentlichen die ganze Länge des ersten Abschnitts (31) oberhalb des Verbindungsorgans (5) und im wesentlichen in der gleichen radialen Richtung wie dieses letztere erstreckt, wobei die erste Traverse (32) des Kabels von einer Konkavität ist, die im wesentlichen radial zur Rotationsachse (A-A) hin gewandt ist.

10. Rotor nach Anspruch 8, **dadurch gekennzeichnet, daß** sich der radiale Teil (76) des ersten Kabelabschnitts (31') zwischen zwei benachbarten Verbindungsorganen (5') des Rotors erstreckt und das äußere radiale Ende (78) dieses radialen Teils (76) einerseits an der Nabe (2') durch eine Verbindung (79) befestigt und andererseits zur zweiten Traverse (32') des Kabels (30') hin durch einen Teil (77) des ersten Abschnitts (31') verlängert ist, der sich im wesentlichen in Umfangsrichtung auf der Nabe (2') erstreckt und von im wesentlichen flachem rechteckförmigen Querschnitt ist, dessen größere Abmessung im wesentlichen senkrecht zur Drehachse (A-A) ist, wobei die erste Traverse (32') von einer Konkavität ist, die im wesentlichen in Umfangsrichtung zum entsprechenden Verbindungsorgan (5') hin gewandt ist.

11. Rotor nach einem der Ansprüche 5 bis 10, **dadurch gekennzeichnet, daß** zumindest ein Teil von rundem Querschnitt (31, 42) des Kabels (30) an wenigstens einem Teil (32, 41) von im wesentlichen flachem rechteckförmigen Querschnitt über ein Kupplungsstück von übergehendem Querschnitt (33, 41b) angeschlossen ist.

12. Rotor nach einem der Ansprüche 1 bis 11, **dadurch gekennzeichnet, daß** wenigstens eine Verbindung (49, 50) des Verbindungskabels (30) am Verbindungsorgan (5) einen Verbindungsflansch (49) umfaßt, der auf das Verbindungskabel (30) aufgegossen ist.

13. Rotor nach einem der Ansprüche 2 bis 12, **dadurch gekennzeichnet, daß** der innere radiale Teil jedes Verbindungsorgans (5) als innerer Gabelkopf (5c) ausgebildet ist und die entsprechenden Halte- und Gelenkmittel (4) eine Bewehrung (4c) enthalten, die zwischen den Zweigen des inneren Gabelkopfes (5c) durch verbolzte Achsen (8) mit Kopf (8a) befestigt ist, der durch Kopfsicherungsbremsen (38) gebremst wird, wobei die erste Verbindung des Verbindungskabels (30) zum Verbindungsorgan (5) mittels wenigstens einer Stütze (37) der Kopfsicherungsbremsen (38) sichergestellt ist, wobei die Stütze (37) selbst durch wenigstens eine der verbolzten Achsen (8) am Verbindungsorgan (5) gehalten ist.

14. Rotor nach einem der Ansprüche 2 bis 13, **dadurch gekennzeichnet, daß** jedes Verbindungsorgan (5, 5') mit der Nabe (2, 2') oder mit benachbarten Verbindungsorganen (5, 5') durch zwei Widerstandsdämpfer (51, 51') verbunden ist, die jeweils durch ein Ende (52) in jeweils einem von zwei Gabelköpfen (5d, 5e) gelenkig angebracht sind, die seitlich auf entgegengesetzten Seiten des Verbindungsorgans (5, 5') radial außerhalb der entsprechenden Halte- und Gelenkmittel (4, 4') hervorstehen, wobei die zweite Verbindung des Verbindungskabels (30, 30') mit dem Verbindungsorgan (5, 5') mit Hilfe eines Einspanners (50, 50') sichergestellt ist, der quer am Verbindungsorgan (5, 5') angeordnet ist, an dem er durch Halteachsen (53-54) der Widerstandsdämpfer (51, 51') in den seitlichen Gabelköpfen (5d, 5e) gehalten wird.

15. Rotor nach Anspruch 14, **dadurch gekennzeichnet, daß** das Verbindungskabel (30) gegenüberliegend zum Einspanner (50) einen Flansch (49) enthält, der auf dem Einspanner (50) aufgegossen ist.

16. Rotor nach einem der Ansprüche 2 bis 15, **dadurch gekennzeichnet, daß** das Verbindungskabel am Verbindungsorgan (5) durch eine zusätzliche Verbindung befestigt ist, die zwischen der ersten (37) und zweiten Verbindung (50) liegt, wobei die zusätzliche Verbindung durch ein Schiebelager sichergestellt ist, das ein Teil (58") enthält, das unter dem dritten Kabelabschnitt (41") hervorsteht und schwalbenschwanzförmig ist und das in radialer Richtung des Verbindungsorgans (5) verschiebbar in einer komplementären Schwalbenschwanzaussparung angebracht ist, die im oberen Teil des Verbindungsorgans (5) angeordnet ist.

17. Rotor nach Anspruch 16, **dadurch gekennzeichnet, daß** die Schwalbenschwanzaussparung in einer Platte (57) des Schiebelagers angeordnet ist, die im Oberteil des Verbindungsorgans (5) befestigt ist.

18. Rotor nach Anspruch 16, **dadurch gekennzeichnet, daß** die Schwalbenschwanzaussparung direkt im oberen Teil des Verbindungsorgans (5) angeordnet ist.

## Claims

1. A rotorcraft rotor with an installation for electrical connection between at least one electric supply conductor (18) and an electric device (15) for de-icing a blade (3, 3') of the rotor, which is of the type comprising:
- a hub (2, 2') integral in terms of rotation with a rotor mast (1) about an axis (A-A) of rotation of the rotor, and
- at least two blades (3, 3'), each of which is linked to the hub (2, 2') by means of a linking member (5, 5') which is substantially radial relative to the axis of rotation (A-A) and itself linked to the hub (2, 2') by retaining and articulating means (4, 4'),
the connection installation comprising at least one connecting cable (30, 30') having at least one elongate electric conducting element (34, 78) coupling the said supply conductor (18) borne by the hub (2, 2') to at least one electric conductor (16) of the said de-icing device (15) borne by the blade (3, 3'),
**characterized in that** the connecting cable (30, 30') comprises a first stretch (31, 31'), of which a first end (31a, 31'a), in an internal radial position, is linked to the said supply conductor (18) of the hub (2, 2') by a first connector (24, 24') mounted on the hub (2, 2'), and of which the second end is coupled to a first end (32a, 32'a) of a second stretch of the connecting cable (30, 30'), the said second stretch comprising a first overhead hook (32, 32') in the form of a flattened half loop, and its second end (32b, 32'b) being linked to the said de-icing conductor (16) of the said blade (3, 3') by a second connector (43, 43') fitted on the upper part of the blade (3, 3'), at least the said first hook (32, 32') having an unscreened structure and exhibiting an elongate part of substantially flattened rectangular transverse section, the largest dimension of which is substantially perpendicular to the axis of rotation (A-A), as well as a concavity pointing substantially towards the said retaining and articulating means (4, 4'), the said first hook (32, 32') being deformable in bending and in torsion in order to accommodate the angular deflections in terms of pitch, drag and flapping of the blade (3, 3') and of its member (5, 5') for linking relative to the hub (2, 2').

2. Rotor according to Claim 1, **characterized in that** the said second end (32b, 32'b) of the said second stretch of cable (32, 32') is linked to the said second connector (43, 43'), being coupled to a first end (41a, 41'a) of a third stretch (41, 41') of connecting cable (30, 30') running substantially radially along the corresponding linking member (5, 5') to which it is fixed by at least a first (37, 80) and a second (50, 50') link respectively close to its first end (41a, 41'a) and second end (41b, 41'b) in an internal radial and external radial position respectively, the third stretch (41, 41') being linked by its second end (41b, 41'b) to the said second connector (43, 43') and also having an unscreened structure, exhibiting an elongate part of substantially flattened rectangular transverse section, the largest dimension of which is substantially perpendicular to the axis of rotation (A-A).

3. Rotor according to one of Claims 1 and 2, **characterized in that** the said elongate part of the first hook (32, 32') and/or of the third stretch (41, 41') of the connecting cable (30, 30') comprises several elongate electric conducting elements (34), which are substantially mutually parallel, spaced apart and embedded in an insulating and elastically deformable jacketing matrix (35) between strips of fabric (36) on the long sides of its substantially rectangular transverse section.

4. Rotor according to one of Claims 2 and 3, **characterized in that** each linking member (5, 5') is distinct from the root (3a, 3'a) of the corresponding blade (3, 3') and includes an external radial part arranged as an external clevis block (5b, 62) in which the said blade root (3a, 3'a) is held, and the second end (41b, 41'b) of the third stretch of cable (41, 41') is linked to the said second connector (43, 43'), being coupled to a first end of a fourth stretch of cable comprising a second overhead hook (42, 42') running from the said linking member (5, 5') to the blade (3, 3'), and of which the second end (42b, 42'b) is coupled to the said second connector (43, 43').

5. Rotor according to Claim 4, **characterized in that** the second hook (42, 42') of the connecting cable (30, 30') exhibits a rounded transverse section, and possibly a screened structure, and the second connector (43, 43') comprises, on the one hand, a base (44, 44') coupled to the said de-icing conductor (16) of the blade (3, 3') and equipped with a flange (45, 45') for fixing to the blade (3, 3'), and, on the other hand, a plug (47, 47') connected to the base (44, 44') and equipped with a coupling (48, 48') mounted on the second end (42b, 42'b) of the said fourth stretch of cable (42, 42') linked to the blade (3, 3').

6. Rotor according to one of Claims 4 and 5, **characterized in that** the root (3a) of each blade (3) is held in the said external clevis block (5b) of the corresponding linking member (5) by two substantially mutually parallel pins (6), one of which is removable to allow the blade (3) to be folded back relative to the linking member (5) by pivoting about the other pin (6), the plug (46) of the second connector (43) on the second end (42b) of the fourth stretch of cable (42) being connected removably to the corresponding base (44), fixed to the blade (3), of the second connector (43).

7. Rotor according to one of Claims 4 and 5, **characterized in that**, for each linking member, the said external clevis block (62) holding the root (3'a) of the corresponding blade (3') is arranged in a hinging fitting (61) constituting the external radial part of the linking member (5') and mounted on the latter by a link (63-64) pivoting about an axis of hinging (B-B) of the blade (3') with the fitting (61) relative to the said linking member (5'), the second hook (42') of the connecting cable (30) running from the second connector (43'), on the blade (3'), to a rotating part (72) of a rotating coupling (71) also comprising a stationary part (73) on the linking member (5'), and on which the rotating part (72) is mounted so that it can rotate coaxially with the pivoting link (63-64) of the hinging fitting (61) on the linking member (5'), the stationary part (73) of the rotating coupling (71) being linked to the second end (41'b), the external radial end, of the third stretch of cable (41') by a part (75) of the fourth stretch of cable (75-41') which runs along the linking member (5').

8. Rotor according to any one of Claims 1 to 7, **characterized in that** the first stretch of cable (31, 31') comprises at least one radial part of rounded transverse section, possibly with a screened structure, the internal radial end (31a, 31'a) of which is mounted in a coupling (27, 27') of a plug (28, 28') of the first connector (24, 24'), the said plug (28, 28') complementing a base (25, 25') of the first connector (24, 24'), which base is coupled to the supply conductor (18) on the hub (2, 2') and equipped with a flange (26, 26') mounted on the hub (2, 2').

9. Rotor according to Claim 8, **characterized in that** the radial part of the first stretch of cable (31) runs along substantially the entire length of the first stretch (31) above the linking member (5) and substantially in the same radial direction thereas, the first hook (32) of the cable having a concavity pointing substantially radially towards the axis of rotation (A-A).

10. Rotor according to Claim 8, **characterized in that** the radial part (76) of the first stretch of cable (31') runs between two neighbouring linking members (5') of the rotor, and the external radial end (78) of this radial part (76) is, on the one hand, fixed to the hub (2') by a link (79) and, on the other hand, extended towards the first hook (32') of the cable (30') by part (77) of the first stretch (31') running in a substantially circumferential direction on the hub (2') and of substantially flattened rectangular transverse section, the largest dimension of which is substantially perpendicular to the axis of rotation (A-A), the first hook (32') having a concavity pointing in a substantially circumferential direction towards the corresponding linking member (5').

11. Rotor according to any one of Claims 5 to 10, **characterized in that** at least a part (31, 42) of rounded section of the cable (30) is coupled to at least a part (32, 41) of substantially flattened rectangular section by a coupling (33, 41b) with changing section.

12. Rotor according to any one of Claims 1 to 11, **characterized in that** at least one link (49, 50) of the cable (30) for connecting to the linking member (5) comprises a connecting clamp (49) overmoulded on the connecting cable (30).

13. Rotor according to any one of Claims 2 to 12, **characterized in that** the internal radial part of each linking member (5) is arranged as an internal clevis block (5c) and the corresponding retaining and articulating means (4) comprise an armature (4c) fixed between the branches of the internal clevis block (5c) by threaded spindles (8) with a head (8a) retained by head retainers (38), the first link of the cable (30) for connecting to the linking member (5) being provided using at least one support (37) for the said head retainers (38), the said support (37) itself being retained on the linking member (5) by at least one of the said threaded spindles (8).

14. Rotor according to any one of Claims 2 to 13, **characterized in that** each linking member (5, 5') is linked to the hub (2, 2') or to the neighbouring linking members (5, 5') by two drag dampers (51, 51') each articulated by one end (52) in one respectively of two clevis blocks (5d, 5e) projecting laterally on the opposite sides of the linking member (5, 5') radially on the outside of the corresponding retaining and articulating means (4, 4'), the second link of the cable for connecting (30, 30') to the linking member (5, 5') being provided using a strap (50, 50') arranged transversely on the linking member (5, 5') on which it is held by retaining pins (53-54) which hold the drag dampers (51, 51') in the said side clevis blocks (5d, 5e).

15. Rotor according to Claim 14, **characterized in that** the connecting cable (30) includes, opposite the strap (50), an overmoulded clamp (49) fixed to the strap (50).

16. Rotor according to any one of Claims 2 to 15, **characterized in that** the connecting cable is fixed to the linking member (5) by an additional link part way between the first link (37) and second link (50), the additional link being provided by a sliding bearing comprising a part (58") projecting beneath the third stretch of cable (41") and in the shape of a dovetail, and which is mounted so that it can slide in the radial direction of the linking member (5) in a complementary dovetail-shaped recess formed in the upper part of the linking member (5).

17. Rotor according to Claim 16, **characterized in that** the dovetail-shaped recess is formed in a sliding bearing plate (57) fixed on the top face of the linking member (5).

18. Rotor according to Claim 16, **characterized in that** the dovetail-shaped recess is formed directly in the upper part of the linking member (5).
